# EUROPEAN PATENT SPECIFICATION

(11) **EP 3 619 602 B1**
(45) Date of publication and mention of the grant of the patent: **09.06.2021**
(21) Application number: 17787720.6
(22) Date of filing: 03.10.2017
(51) Int. Cl.: G06F 8/65

(54) **UPDATE COURIER FOR VEHICULAR COMPUTING DEVICES**
AKTUALISIERUNGSKURIER FÜR RECHENVORRICHTUNGEN EINES FAHRZEUGS
MESSAGERIE DE MISE À JOUR POUR DISPOSITIFS INFORMATIQUES DE VÉHICULE

(43) Date of publication of application: 11.03.2020
(60) Divisional application: 21171046.2
(73) Proprietor: Google LLC, Mountain View, CA 94043 (US)
(72) Inventor: RAMIC, Haris, Mountain View California 94043 (US); SAUER, Nicholas, Mountain View California 94043 (US)
(74) Representative: Anderson, Oliver Ben
(86) International application number: PCT/US2017/054858
(87) International publication number: WO 2019/070235

(56) References cited:
- US-A1- 2015 230 044
- US-A1- 2016 266 886

## Description

### BACKGROUND

Vehicles can include mechanical or electrical logic circuitry to control vehicular functionality.

US2015230044 describes that software for embedded vehicle computers in a motor vehicle is updated using a smart phone having Bluetooth connectivity or USB connectivity. An application program or "app" running the phone queries a server via the Internet, for any available software updates for a vehicle. The vehicle is identified to the server by the app using the vehicle identification number (VIN). When an update for an embedded computer is available, the server transfers the update as one or more files, which are transmitted to the phone via a cell phone network and stored in the phone until the phone can be linked to the vehicle. After the phone and vehicle are linked the update is transferred to the vehicle, preferably using Bluetooth. Software on the vehicle copies the new software into an appropriate memory device via a bus running through-out the vehicle.

US2016266886 describes a mobile vehicle communications system and method for performing a software update at a vehicle. The method carried out by the system includes the steps of: providing a vehicle user of an update availability message associated with a vehicle electronic control unit (ECU); receiving a vehicle user consent to install the update; determining whether a vehicle ignition OFF condition is TRUE; when the vehicle ignition OFF condition is TRUE, then installing the update; and providing a notification to a mobile device associated with the vehicle user that the installation is complete.

### SUMMARY

The matter for protection is defined by the claims.

### BRIEF DESCRIPTION OF THE DRAWINGS

The accompanying drawings are not intended to be drawn to scale. Like reference numbers and designations in the various drawings indicate like elements. For purposes of clarity, not every component may be labeled in every drawing. In the drawings:
FIG. 1A is a block diagram of an illustrative network environment and vehicle, in accordance with an illustrative implementation;
FIG. 1B is a block diagram of an illustrative top view, and interior cabin, of the vehicle from FIG. 1A;
FIG. 2 is a block diagram of illustrating separation between the vehicle and an update package source;
FIG. 3 is a ladder diagram of a data exchange for installing an update package;
FIG. 4 is a flowchart of an example method for transferring an update package;
FIG. 5 is a flowchart of an example method for installing an update package; and
FIG. 6 is a block diagram illustrating a general architecture for a computer system that may be employed to implement elements of the systems and methods described and illustrated herein.

### DETAILED DESCRIPTION

Following below are more detailed descriptions of various concepts related to, and implementations of, methods, apparatuses, and systems for updating functionality of vehicular computing devices. The various concepts introduced above and discussed in greater detail below may be implemented in any of numerous ways.

The present disclosure is generally directed to solutions for updating functionality of vehicular computing devices. The solutions described address technical problems specific to updating functionality of vehicular computing devices, and may be applied to similar problems in other contexts as well. For example, a problem encountered with updating functionality of vehicular computing devices is that the vehicular computing devices are mobile and thus not reliably connected to a data network such as the Internet. Some vehicular computing devices may lack any suitable data network connection. By using an intermediary courier device, network connection reliability may be improved. In addition, the courier device may have access to networks that are not directly accessible by the vehicular computing devices. Another problem is that an update to a vehicular computing device may be disruptive to the vehicular computing device, and possibly to the vehicle itself. This disruption may not be acceptable, and it may be beneficial to minimize or eliminate any disruption when updating functionality of vehicular computing devices. The solutions described address this as well.

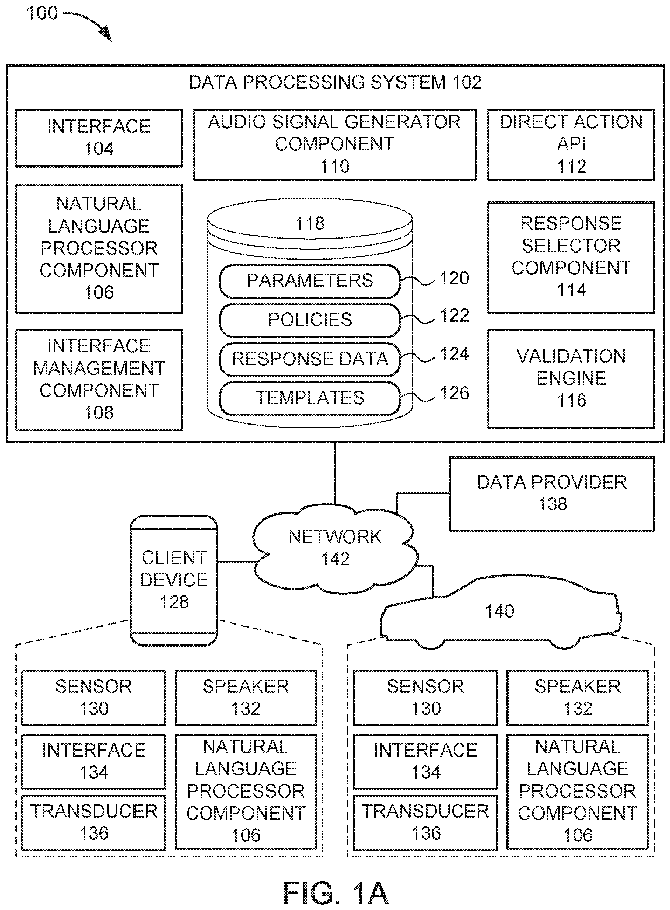

FIG. 1A is a block diagram of an illustrative network environment 100 and vehicle 140, in accordance with an illustrative implementation. The illustrative network environment 100 can include at least one data processing system 102, one or more client devices 128, and one or more vehicles 140.

The data processing system 102 can include an interface 104. The data processing system 102 can include a natural language processor ("NLP") component 106 to parse audio-based inputs. The data processing system 102 can include an interface management component 108 to detect and manage the interfaces of other devices in the system 100. The data processing system 102 can include an audio signal generator component 110 to generate audio-based signals. The data processing system 102 can include an application programming interface ("API") 112. The data processing system 102 can include a response selector component 114 to select responses to audio-based input signals. The data processing system 102 can include a validation engine 116 to validate audio-based inputs received by the data processing system 102. The data processing system 102 can include a data repository 118 in which the data processing system 102 can store parameters 120, policies 122, response data 124, and templates 126. The client device 128 and the vehicle 140 can include and execute instances of the components of the data processing system 102. The data repository 118 can store update packages. The data repository 118 can store temporary recovery images. The client device 128 and the vehicle 140 can each include an instance of the data processing system 102.

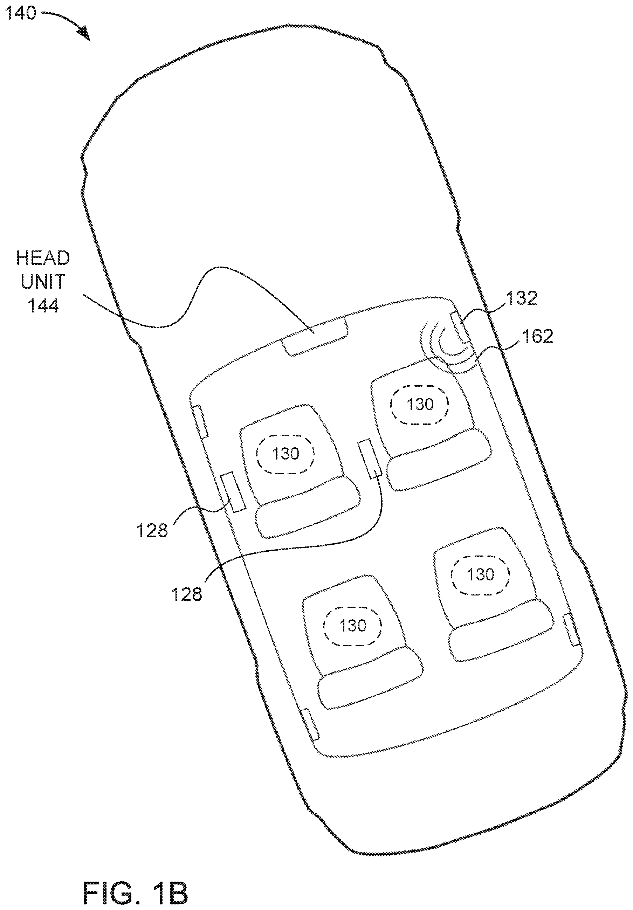

The system 100 can also include one or more client devices 128. The client devices 128 can include sensors 130, speakers 132, interfaces 104, and transducers 136. The client devices 128 can execute an instance of the NLP component 106. The system 100 can also include one or more data providers 138. The system 100 can include one or more vehicles 140. The vehicles 140 can include sensors 130, speakers 132, interfaces 104, and transducers 136. The vehicles 140 can execute an instance of the NLP component 106. The components of the system 100 can communicate over a network 142. In some implementations, one or more of the client devices 128 can be located within an instance of the vehicle 140. For example, the client device 128 can be the mobile phone of a driver driving the vehicle 140. (FIG. 1B, described below, illustrates an example in which two client devices 128 are present within the vehicle 140, e.g., a driver's and another passenger's.) One or more of the client devices 128 can be remote to the vehicles 140. For example, after the driver parks and exits the vehicle 140 for work, the driver's mobile phone may be remote from the vehicle 140.

The network 142 can include computer networks such as the Internet, local, wide, metro, or other area networks, intranets, satellite networks, other computer networks such as voice or data mobile phone communication networks, and combinations thereof. The network 142 can be used by the data processing system 102, client devices 128, and vehicles 140 to access information resources such as web pages, web sites, domain names, uniform resource locators, or data providers 138. For example, the data processing system 102 can, via the network 142, access a data provider 138 that provides weather data for specific locations, such as a location associated with a vehicle 140. In some instances, a client device 128 may have a high bandwidth connection to the network 142 in a first context and a lower bandwidth connection to the network 142 in another context. For example, at home or at work, a client device 128 may be on a high-bandwidth "Wi-Fi" connection, whereas at other locations, the client device 128 may use a telephony-based mobile data network with a lower bandwidth. The telephony-based mobile data network may also have higher latency than the home or office "Wi-Fi" connection. The vehicle 140 can include a network interface to a network 142 independent of the client device 128. The network interface specific to the vehicle 140 can have lower bandwidth and higher latency than the client device 128. The network interface specific to the vehicle 140 may require an optional service plan that might not be activated and thus might not be available for use.

The network 142 can include, for example, a point-to-point network, a broadcast network, a wide area network, a local area network, a telecommunications network, a data communication network, a computer network, an Asynchronous Transfer Mode ("ATM") network, a Synchronous Optical Network ("SONET") network, a Synchronous Digital Hierarchy ("SDH") network, a wireless network or a wireline network, and combinations thereof. The network 142 can include a wireless link, such as an infrared channel or satellite band. The topology of the network 142 may include a bus, star, or ring network topology. The network 142 can include mobile telephone networks using any protocol or protocols used to communicate among mobile devices, including advanced mobile phone protocol ("AMPS"), time division multiple access ("TDMA"), code-division multiple access ("CDMA"), global system for mobile communication ("GSM"), general packet radio services ("GPRS"), or universal mobile telecommunications system ("UMTS"). Different types of data may be transmitted via different protocols, or the same types of data may be transmitted via different protocols.

The client devices 128 and the vehicles 140 can each include at least one logic device such as a computing device having a processor to communicate with each other with the data processing system 102 via the network 142. The client devices 128 and the vehicles 140 can include an instance of the any of the components described in relation to the data processing system 102. The client devices 128 and the vehicles 140 can include an instance of the data processing system 102. The client devices 128 can include a desktop computer, laptop, tablet computer, personal digital assistant, smartphone, mobile device, portable computer, thin client computer, virtual server, speaker-based digital assistant, or other computing device. The vehicle 140 can be a car, truck, motorcycle, boat, aircraft, or other transportation device. The vehicle 140 can include one or more processors that can execute an instance of the data processing system 102 or any component thereof. The processors can be a component of the vehicle's head unit 144 (shown in FIG. 1B).

The client device 128 and the vehicle 140 can include at least one sensor 130, at least one transducer 136, at least one audio driver, and at least one speaker 132. The sensor 130 can include a microphone or audio input sensor. The sensor 130 can also include at least one of a proximity sensor, an ambient light sensor, a temperature sensor, a motion sensor, an accelerometer, or a gyroscope. The sensor can include an occupancy or weight sensor. The transducer 136 can convert the audio input into an electronic signal. The audio driver can include a script or program executed by one or more processors of the client device 128 or the vehicle 140 to control the speaker 132. The speaker 132 can render audio signals by converting electrical signals into audible waves. In some implementations, a sensor 130 may include a receiver for a satellite-based location service. Examples of system satellite-based location services (also known as global navigation satellite systems, "GNSS") include the U.S. Global Positioning System ("GPS"), the Russian Global Navigation Satellite System ("GLONASS"), and the European Union's Galileo system.

The client device 128 and the vehicle 140 can be associated with an end user that enters voice queries as input audio signal into the client device 128 or the vehicle 140 (via the sensor 130) and receives audio output in the form of a computer generated voice that can be provided from the data processing system 102. In response to the input audio signals, the client device 128 and the vehicle 140 can also receive action data structures to perform predetermined functions or actions. The interface 104 can receive or provide data messages to the direct action API 112 of the data processing system 102 and enable communication between the components of the system 100. The client device 128 and the vehicle 140 can also include a user interface that enables a user to interact with the components of the system 100.

The system's data processing system 102 can include at least one server having at least one processor. For example, the data processing system 102 can include a plurality of servers located in at least one data center or server farm. The data processing system 102 can determine from an audio input signal a request and a trigger keyword associated with the request. Based on the request and trigger keyword, the data processing system 102 can generate or select response data. The response data can be audio-based or text-based. For example, the response date can include one or more audio files that when rendered provide an audio output or acoustic wave. The data within the response data can also be referred to as content items. The response data can include other content (e.g., text, video, or image content) in addition to audio content.

The data processing system 102 can include multiple, logically grouped servers and facilitate distributed computing techniques. The logical group of servers may be referred to as a data center, server farm or a machine farm. The servers can be geographically dispersed. A data center or machine farm may be administered as a single entity, or the machine farm can include a plurality of machine farms. The servers within each machine farm can be heterogeneous-one or more of the servers or machines can operate according to one or more type of operating system platform. The data processing system 102 can include servers in a data center that are stored in one or more high-density rack systems, along with associated storage systems, located for example in an enterprise data center. The data processing system 102 with consolidated servers in this way can improve system manageability, data security, the physical security of the system, and system performance by locating servers and high performance storage systems on localized high performance networks. Centralization of all or some of the data processing system 102 components, including servers and storage systems, and coupling them with advanced system management tools allows more efficient use of server resources, which saves power and processing requirements and reduces bandwidth usage. Each of the components of the data processing system 102 can include at least one processing unit, server, virtual server, circuit, engine, agent, appliance, or other logic device such as programmable logic arrays configured to communicate with the data repository 118 and with other computing devices.

The data processing system 102 can include the data repository 118. The data repository 118 can include one or more local or distributed databases and can include a database management system. The data repository 118 can include computer data storage or memory and can store one or more parameters 120, one or more policies 122, response data 124, and templates 126, among other data. The parameters 120, policies 122, and templates 126 can include information such as rules about a voice based session between the client device 128, data processing system 102, and vehicle 140. The response data 124 can include content items for audio output or associated metadata, as well as input audio messages that can be part of one or more communication sessions with the client device 128.

An application, script, program, digital assistant application or other components that are associated with the data processing system 102 can be installed at the client device 128 or the vehicle 140. The application can enable the client device 128 (e.g. via the interface 134) or vehicle 140 to communicate input audio signals (and other data) to the interface 104 of the data processing system 102. The application can enable the client device 128 and the vehicle 140 to drive components of the client device 128 and the vehicle 140 to render the output audio signals.

The data processing system's NLP component 106 can receive input audio signals. The data processing system 102 can receive the input audio signal from the client device 128 or the vehicle 140. A first device can execute the NLP component 106 and the NLP component 106 can receive the input audio signal from a second device. For example, the vehicle 140 can execute the NLP component 106 and the input audio signal can be received from the client device 128.

The NLP component 106 can convert input audio signals into recognized text by comparing the input audio signal against a stored, representative set of audio waveforms and choosing the closest matches. The representative waveforms can be generated across a large set of input audio signals. Once the input audio signal is converted into recognized text, the NLP component 106 can match the text to words that are associated, for example, via a learning phase, with actions or output audio signals.

From the input audio signal, the NLP component 106 can identify at least one request or at least one trigger keyword corresponding to the request. The request can indicate intent or subject matter of the input audio signal. The trigger keyword can indicate a type of action likely to be taken. For example, the NLP component 106 can parse the input audio signal to identify at least one request to open the vehicle's windows or skip to a next audio file in a music playlist. The trigger keyword can include at least one word, phrase, root or partial word, or derivative indicating an action to be taken. For example, the trigger keywords "go" or "ok."

The response selector component 114 can obtain information from the data repository 118, where it can be stored as part of the response data 124. The response selector component 114 can query the data repository 118 to select or otherwise identify response phrases or content item, e.g., from the response data 124.

The audio signal generator component 130 can generate or otherwise obtain an output signal that includes the content item. The data processing system 102 can execute the audio signal generator component 110 to generate or create an output signal corresponding to the content item or request. For example, once a request is fulfilled, the signal generator component 110 can generate an audio output signal that includes the phrase "The action was completed."

The interface 104 can be a data interface or a network interface that enable the components of the system 100 to communicate with one another. The interface 104 of the data processing system 102 can provide or transmit one or more data packets that include the action data structure, audio signals, or other data via the network 142 to the client device 128 or vehicle 140. For example, the data processing system 102 can provide the output signal from the data repository 118 or from the audio signal generator 110 to the client device 128. The data processing system 102 can also instruct, via data packet transmissions, the client device 128 or the vehicle 140 to perform the functions indicated in the action data structure. The output signal can be obtained, generated, transformed to or transmitted as one or more data packets (or other communications protocol) from the data processing system 102 (or other computing device) to the client device 128 or the vehicle 140.

The direct action API 112 of the data processing system 102 can generate, based on, for example, the request, action data structures. The action data structure can include data or instructions for the execution of a specified action to satisfy the request. In some implementations, the action data structure can be a JSON formatted data structure or an XML formatted data structure.

Depending on the action specified in the request, the direct action API 112 can execute code or a dialog script that identifies the parameters required to fulfill the request. The action data structures can be generated responsive to the request. The action data structure can be included in messages that are transmitted to or received by the client device 128 or the vehicle 140. Based on the request parsed by the NLP component 106, the direct action API 112 can determine to which of the client devices 128 or the vehicles 140 the message should be sent. For example, if an input audio signal includes "open a window," the NLP component 106 can identify the action word "open a window." The direct action API 112 can package the request into an action data structure for transmission to a vehicle 140. The direct action API 112 can access a vehicle ID from the response data 124 to determine which vehicle is associated with the user that generated the request. Once received, the vehicle 140 can process the action data structure and open the vehicle's window.

The action data structure can include information for completing the request. For example, the action data structure can be a XML or JSON formatted data structure that includes attributes used in completing or otherwise fulfilling the request. The attributes can include a location of the vehicle 140, a location of the client device 128, an authorization level of a user associated with a client device 128, a vehicle identifier, an interface identifier, a vehicular state, or a request state. The request state can include one or more attributes that should be satisfied before the action is fulfilled. For example, the request "Ok, change the song" the request state may have the attribute {requestor: [authorized, passenger]} indicating that the request should be an explicitly authorized user or a passenger in the vehicle.

The direct action API 112 can retrieve a template 126 from the repository 118 to determine which fields or attributes to include in the action data structure. The direct action API 112 can determine necessary parameters and can package the information into an action data structure. The direct action API 112 can retrieve content from the repository 118 to obtain information for the attributes of the data structure.

The direct action API 112 can populate the fields with data from the input audio signal. The direct action API 112 can also populate the fields with data from the data provider 138, the client device 128, or the vehicle 140. The direct action API 112 can prompt a user for additional information when populating the fields. The templates 126 can be standardized for different types of actions, such as playing media files through the vehicle's head unit, responding to messages, and performing functions within the car. The action data structure can initially be generated by a direct action API 112 executed by a remote data processing system 102. The remote data processing system 102 can transmit the action data structure to the data processing system 102 of the vehicle 140, which can add fields and attributes to the action data structure.

The direct action API 112 can obtain response data 124 (or parameters 120 or policies 122) from the data repository 118, as well as data received with end user consent from the client device 128 to determine location, time, user accounts, logistical or other information in order to reserve a car from the car share service. The response data 124 (or parameters 120 or policies 122) can be included in the action data structure. When the content included in the action data structure includes end user data that is used for authentication, the data can be passed through a hashing function before being stored in the data repository 118.

The data processing system 102 can include, interface, or otherwise communicate with the validation engine 116. The validation engine 116 can validate or otherwise determine if the actions and functions associated with action data structures should be executed or fulfilled. When validated, the validation engine 116 can enable the request to be fulfilled. The validation engine 116 can determine if the requestor has the authority to have the action fulfilled, whether it is safe to fulfill the action, or whether other functions should be fulfilled in place of the requested function or action.

For example, in response to receiving the input audio signal "Ok, open the trunk," the validation engine 116 can determine not to open the trunk because the vehicle 140 is driving down a road and opening the trunk would not be safe. In another example, in response to receiving the input audio signal, "Ok, next song," the validation engine 116 can determine the user has the authority to change the song and skip to the next song. The validation engine 116 can be executed by or a component of the client device 128 and the vehicle 140. For example, the vehicle 140 may execute a local instance of the validation engine 116 when the vehicle 140. The vehicle 140 can offload computational work to the remote validation engine 116 when the validation engine 116 has a connection to the network 142 and process the requests with a local instance of the validation engine 116 when the vehicle 140 does not have a connection to the network 142.

The validation engine 116 can validate the actions based on data from external sensors data, such as data received from the data providers 138, sensors 130 of the client device 128, and sensors 130 the vehicle 140. The validation engine 116 can also validate the actions based on the administrative rights of a user that generated the input audio signal. The validation engine 116 can validate the actions based on the vehicular state of the vehicle 140.

The validation engine 116 can determine a vehicular state of the vehicle 140 based on a set of sensor data. The vehicular state can indicate the current state of the vehicle 140 where the request is to be fulfilled. The vehicular state can indicate whether the vehicle 140 is moving, in park, or idling. The vehicular state can indicate the speed of the vehicle 140. The validation engine 116 can use a combination of sensor data to determine the vehicular state. The combination of sensor data can be used to differentiate different states that might have similar conditions. For example, the different states of stopped at a red light, stopped in a parking lot, stopped in traffic, and in park in a parking lot may have some similar conditions (e.g., a vehicle speed of 0 mph), but different functions may be authorized in each of the different states. For example, it may be safe to open the trunk when the vehicle 140 is in park in a parking lot but not when the vehicle 140 is stopped at a red light. The vehicular state can include a plurality of substates, such as a movement state, an external environment state, an internal environment state, and a device state.

The movement sub-state can include attributes such as current and average speed, current and average acceleration, driving mode status, and gear status. The external environment sub-state can include attributes such as external weather conditions (e.g., raining, sunny, or snowing), external temperature, external weather condition forecast, and external temperature forecast. The internal environment sub-state can include attributes such as an internal temperature and an internal zone temperature. The device sub-state can include attributes such as HVAC status (e.g., air conditioning on, air conditioning off, heating on, etc.), window status, lock status, truck status, door ajar status, sunroof status, heated seat status, heated steering wheel status, headlight status, and interior light status.

The validation engine 116 can determine the vehicular state based on a set of sensor data that can include sensor data from the client devices' sensors 130, sensor data from the vehicles' sensors 130, data from the data provider 138, or any combination thereof. Some of the attributes within the vehicular state can be determined from a single sensor (e.g., door ajar status) and others can be determined from a combination of sensor signals (e.g., movement status can be determine from a combination of speed data and gear data).

The sensor data from the client device 128 can include location data determined by cellular tower triangulation or a GNSS receiver in the client device 128, speed data determined by integrating the location data, acceleration data, account data, authorization data, or any combination thereof. The sensor data can include data from one or more data providers 138. The data providers 138 can be internet-based data repositories. The data providers 138 can make their data available by, for example, an API. The data providers 138 can provide weather data, location data, event data, location review data, forecast data, or any combination thereof to the validation engine 116.

The validation engine 116 can determine a request state based on the request parsed from the input audio file. The validation engine 116 can determine the request state based on a second set of sensor data. The data of the first and second set of sensor data can be received as an updating data signal, a vector, data array, scalar value, or other format of data. The request state can include a plurality of attributes under which the action of the request can be executed or that are required for the request to be fulfilled. The request state can be a component of or derived from the action data structure. For example, the request "OK, open the trunk," can include a request state with attributes that indicate the trunk can only open when in a parked condition and when the requested by the driver or an authorized passenger. For example, the request state can be {movement state: parked, requestor: authorized passenger}.

The second set of sensor data for determining the request state can include sensor data from the first set of sensor data the validation engine 116 used to determine the vehicular state. The second set of data can also include the location of the client device 128 (or a user associated therewith) within the vehicle 140.

The validation engine 116 can compare the request state to the vehicular state to determine whether the action of the action data structure should be executed, performed, or further processed. For example, the vehicular state may indicate that the vehicle 140 is parked in a parking lot, with the windows closed, and with the external conditions of rain (e.g., {movement state:parked, windows:closed, external condition:rain}). For example, where the input audio signal is "OK, open the windows," the validation engine 116 may determine that the request state for the request require that the request come from an authorized user, the driving attribute can be driving or parked, and the weather attribute has to be non-rain (e.g., {requestor:authorized, movement state: [driving, parked], external condition: [sunny, overcast, cloudy]}). Comparing the vehicular state to the request state, the validation engine 116 can determine that the vehicular state's external condition attribute does not match (or is not an element of) the request state's external condition attribute. Because the states do not match, the validation engine 116 can determine the request should not be fulfilled because it is raining outside the vehicle 140 and the windows should not be opened when it is raining.

When the validation engine 116 determines that the function should not be fulfilled, the validation engine 116 can generate a request for confirmation that is presented to the user via the interface 104 of the client device 128 or vehicle 140. The request for confirmation can ask the user if the user would like to override the validation engine's decision not to fulfill the request. When the validation engine 116 determines that the function should not be fulfilled, the validation engine 116 can offer to modify the action data structure. Continuing the above example, the validation engine 116 can generate an audio-based prompt asking if the user would like to tile the sunroof.

FIG. 1B is a block diagram of an illustrative top view, and interior cabin, of the vehicle 140. The interior cabin of the vehicle 140 can include a plurality of seats, and each of the seats may include one or more sensors 130. The sensors 130 can be weight or occupancy sensors. The interior cabin of the vehicle 140 can include a plurality of speakers 132. The vehicle 140 can also include a head unit 144, which can execute one or more of the components described in relation to the data processing system 102 or the vehicle 140. For example, the head unit 144 may provide features and functionalities such as navigation, entertainment, vehicle climate control, vehicle operation, personal digital assistant, or speaker-based digital assistant, for example. The speakers 132 can generate sub-audible tones 162 with user authorization, for example. The sub-audible tones 162 can be tones rendered by the speakers 132 that are not within the normal frequency range detectable by users. The system can use audible tones in place of the sub-audible tone 162.

The validation engine 116 can determine the relative position of a client device 128 within the vehicle 140. The position of the client device 128 can be incorporated into one or more attributes of the request state or vehicular state. The position or location of the client devices 128 be a relative position and can include different levels of resolution. For example, the relative location can be regions related to one of the seats, regions related to different zones (e.g., the client devices 128 are in the front zone and no client devices 128 are in the back zone). The relative location of the client devices 128 within the vehicle 140 can be determined using sub-audible tones 162. The relative location of the client devices 128 within the vehicle 140 can be determined based on sensor data from the sensors 130. The relative location of the client devices 128 within the vehicle 140 can be determined based on a combination of the sub-audible tones and sensor data from the sensors 130.

The validation engine 116 can determine the relative location of a client device 128 by determining a time difference between the transmission of a sub-audible tone 162 and the receipt of the sub-audible tone 162 by a client device 128. For example, the head unit 144 can cause one of the speakers 132 to generate a sub-audible tone 162. The speaker 132 can generate the sub-audible tone 162 at a first time. A client device 128 that is relatively closer to the speaker 132 that generated the sub-audible tone 162 will receive the sub-audible tone 162 before a client device 128 that is relatively farther from the speaker 132 that generated the sub-audible tone 162. Once a client device 128 receives or otherwise detects the sub-audible tone 162, the client device 128 can generate a receipt notification that the client device 128 transmits to the head unit 144 or the data processing system 102. The receipt notification can indicate a second time at which the speaker 132 received the sub-audible tone 162. The receipt notification can be transmitted to the data processing system 102 via a cellular network, Wi-Fi network local to the vehicle 140, or via a short-range radio communication protocol such as BLUETOOTH. The validation engine 116 can determine the length of time between the generation of the sub-audible tone 162 and when the client device 128 received the sub-audible tone 162 (e.g., the time difference between the first and second times in the above example). Different speakers 132 can generate different sub-audible tones 162 at different times to enable the data processing system 102 to triangulate the location of the client device 128 within the vehicle 140.

The validation engine 116 can determine the location of the client devices 128 based on data from the sensors 130. The sensors 130 can be weight sensors that can determine if a seat 200 is occupied. For example, the validation engine 116 can determine the seat 200 is occupied when the sensor 130 registers a weight above a predetermined threshold. The validation engine 116 can determine, using the sub-audible tone 162 that a client device 128 is near one of the seats 200. The validation engine 116 can confirm that a user is associated with the client device 128 based on receiving sensor data that the sensor 130 of the determined seat 200 is detecting weight. The sensor data can be used to prevent a user form accessing functions that are only available to certain zones or users. For example, text messaging may be disabled on the client device 128 associated with the driver but enabled for the client devices 128 associated with passengers in the other seats 200 of the vehicle 140. If a driver were to lean over and move his client device 128 into the area of the passenger seat 200, based on the sub-audible tones 162, the validation engine 116 may determine that the client device 128 is associated with the passenger seat 200 and should be allowed to generate requests to use the text messaging program. The validation engine 116 can receive weight data of 0 lbs. from the sensor 130 in the passenger seat 200 and determine that a user is not actually in the passenger seat 200 and may prevent the driver's client device 128 from accessing the text message functionality. The validation engine 116 may update the relative locations of the client devices 128 in the vehicle 140 only after detecting the opening and closing of a door of the vehicle 140.

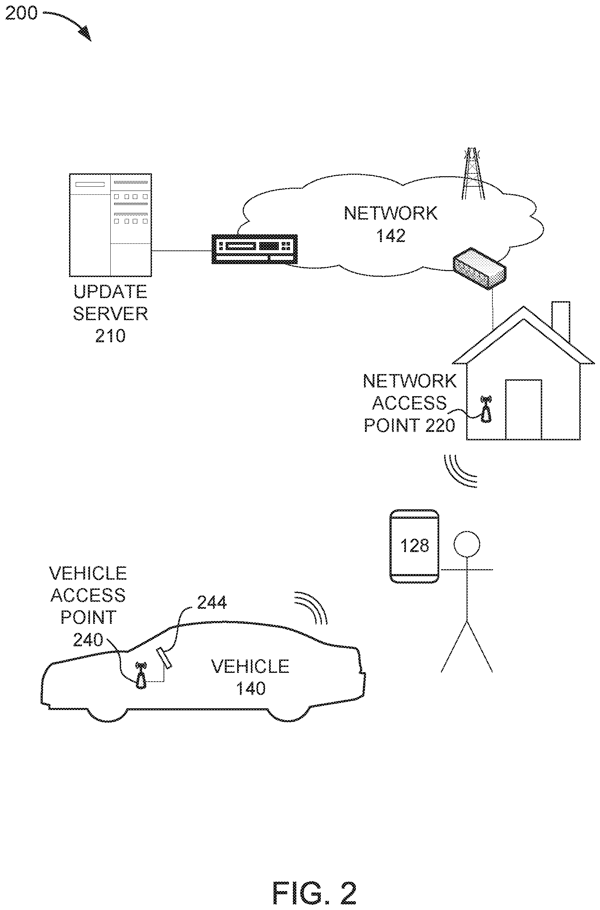

FIG. 2 is a block diagram of illustrating separation between the vehicle 140 and an update package source, e.g., an update server 210. A client device 128 may serve as a courier, receiving an update package from the update server 210 via the network 142 at a network access point 220 and subsequently transfer the received update package to a vehicular computing device 244 at the vehicle 140 via a vehicle access point 240.

The vehicular computing device 244 is a computing device on board the vehicle 140. The vehicular computing device 244 may be installed in the vehicle 140, attached to the vehicle 140, or otherwise present in the vehicle 140. In some implementations, the vehicular computing device 244 is the head unit 144 shown in FIG. 1B and described above. In some implementations, the vehicular computing device 244 manages one or more functions for the vehicle 140. For example, the vehicular computing device 244 may manage features in the vehicle such as automated door locks, automated windows and sunroofs, windshield wipers, alarm systems, entertainment systems, voice-interaction systems, vehicle performance, vehicle diagnostics, and so forth. Updates to the functionality of the vehicular computing device 244 may be sourced from an update server 210 that is remote from the vehicular computing device 244. In some implementations, the vehicular computing device 244 is connected to the update server 210 via a network 142. In some implementations, the vehicular computing device 244 is not connected to the update server 210. For example, the vehicular computing device 244 may lack adequate network connectivity for an update (or may have no network connectivity at all).

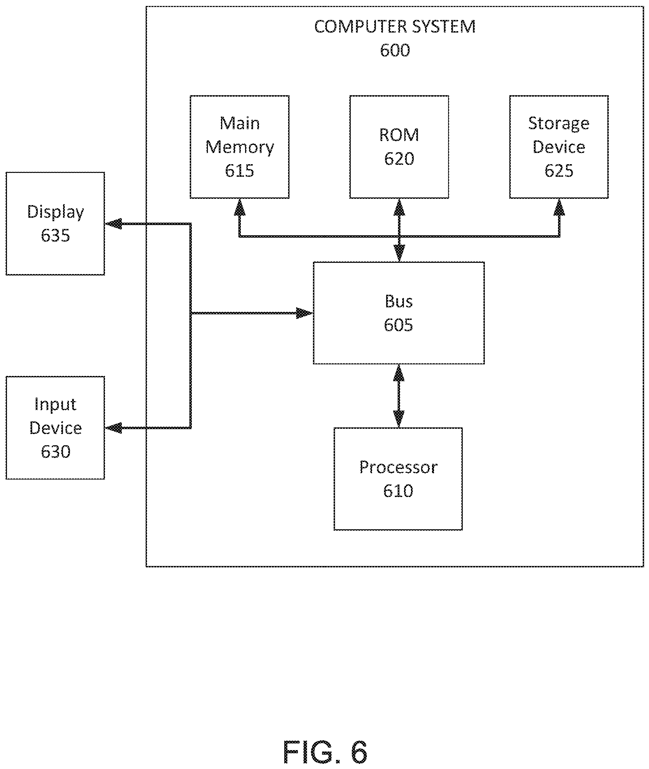

The update server 210 may be one or more servers (e.g., one or more servers in a server farm or data center) configured to provide update packages. The update server 210 can be implemented using a computer system 600, e.g., as described below in reference to FIG. 6. The update server 210 can store, or has access to a data storage system storing, one or more update packages for vehicular computing systems. An update package may include data for updating core functionality such as a device driver, operating system kernel-level code, or support features for installed software. An update package may include data for updating add-on features such as features provided by installed software. An update package may include new software (or "apps") for installation. As an example, an update package may include data for updating functionality of a head unit 144. An update package may include multiple update portions, e.g., a first portion for updating core functionality and a second portion for updating one or more third-party applications. An update package may include verification aides such as checksums, hash signatures, encrypted signatures, or estimated install time, for example. An update package can include installation timing criteria for regulating when an update may be installed. For example, an update may be incompatible with installation while the vehicle 140 is in motion (e.g., the update might alter how the vehicle 140 operates). Update packages are described in more detail below.

The network access point 220 is a connection to the network 142. The network access point 220 may be situated in a residence, a hotel, a work place, a coffee shop, or anywhere else that may provide access to the network 142. The network access point 220 can include a wireless access point, such as a Wi-Fi hotspot. The network access point 220 can include a hub, switch, router, or other network device providing a link to the network 142. The client device 128 can be physically connected to the network access point 220, e.g., using a universal serial bus ("USB") cable or an Ethernet cable. The client device 128 can be connected wirelessly to the network access point 220, e.g., using an IEEE 802.11 protocol over radio transmission. The client device 128 can use a short-range radio protocol such as near-field communications ("NFC") or BLUETOOTH to establish a communication link to the network access point 220. The client device 128 can use the short-range radio protocol for data communications to the network access point 220. The client device 128 can use the short-range radio protocol to initiate or configure a higher bandwidth connection using a second protocol, and can use the second protocol for data communications to the network access point 220. The client device 128 can detect the network access point 220; for example, the network access point 220 may periodically emit a beacon frame containing a service set identifier ("SSID"), and the client device 128 may receive the beacon frame and detect availability of the network access point 220 for access to the network 142.

The client device 128 can be configured to request an update package, e.g., responsive to one or more trigger conditions. For example, a trigger condition may be that the client device 128 detects the access point 220, the client device 128 is in communication with the network access point 220, the client device 128 is in a physical location near (or proximate to) the network access point 220, that a threshold length of time has elapsed since a previous update request, for example. The client device 128 can periodically send a request to an update server 210 to check for updates. The update request can identify one or more components that the client device 128 is able to update. The client device 128 can maintain a catalog of devices (such as a vehicular computing device 244, e.g., the head unit 144, in the vehicle 140) that the client device 128 routinely or occasionally communicates with and could transfer an update package to. The client device 128 may request an update package for one or more of the devices in the catalog. The client device 128 can request an update package for specific software components installed on a device, or to be installed on a device. For example, a vehicular computing device 244 may include a navigation application and an audio entertainment application and the client device 128 may request updates for the audio entertainment application more frequently (e.g., daily) than for the navigation application (e.g., monthly). The update request can include a generalized request for any available updates and the update server 210 selects the updates to be delivered in the update package. For example, the update server 210 may obtain location data for the vehicle 140 and select only location-relevant updates (e.g., only maps for a geographic region encompassing the vehicle location, only points of interest data for destinations within a threshold distance of the vehicle location, only updates in languages commonly used in the vehicle location, etc.) In some examples, a vehicle dealership may request location-specific updates prior to selling a vehicle; the vehicle dealership may request regionally relevant updates, promotional updates, dealer-specific updates, etc. A manufacturer (or original equipment manufacturer, "OEM") can customize update packages for installation at the vehicle dealership, such that applications, firmware, etc., may be updated at a sales destination and thus closer to a point and time of sale. A purchaser may select from a menu of OEM offerings and the vehicle dealership may configure an update package in accordance with the purchaser selections.

The request for an update can include a request for installation of a new functionality, e.g., installation of a new application. The request for an update can include a request for an upgrade to an installed functionality, e.g., an upgrade to an installed application. The request for an update can include a request for an update to data used by an installed application, e.g., new maps for a navigation system or new media content for an entertainment system.

The vehicle access point 240 is a connection to a vehicular computing device 244, e.g., the head unit 144, in the vehicle 140. The vehicle access point 240 is able to communicate with the client device 128 to facilitate data communication between the client device 128 and the vehicular computing device 244. The vehicle access point 240 can include a wireless access point, such as a Wi-Fi hotspot. The network access point 220 can include a hub, switch, router, or other network device providing a link to the network 142. The client device 128 can be physically connected to the network access point 220, e.g., using a universal serial bus ("USB") cable or an Ethernet cable. The client device 128 can be connected wirelessly to the network access point 220, e.g., using an IEEE 802.11 protocol over radio transmission. The client device 128 can use a short-range radio protocol such as near-field communications ("NFC") or BLUETOOTH to establish a communication link to the vehicle access point 240. The client device 128 can use the short-range radio protocol for data communications to the vehicle access point 240. The client device 128 can detect the vehicle access point 240; for example, the vehicle access point 240 may periodically emit a beacon frame containing a service set identifier ("SSID"), and the client device 128 may receive the beacon frame and detect availability of the vehicle access point 240 for access to the vehicular computing device 244 in the vehicle 140. The client device 128 uses the short-range radio protocol to initiate or configure a higher bandwidth connection using a second protocol, and uses the second protocol for data communications to the vehicle access point 240. The client device 128 can detect the vehicle access point 240; for example, the vehicle access point 240 may periodically emit a discovery signal alerting the client device 128 to its availability to connect (or vice versa, such that the client device 128 emits a discovery signal alerting the vehicle access point 240 to its availability to connect).

The client device 128 may be moved between locations with network access points 220 and a vehicle 140 with a vehicle access point 240. For example, an owner, driver, passenger, or other person with access to the vehicle 140 may carry the client device 128 into the vehicle 140. That is, the client device 128 may be at a first location with the network access point 220 (where it can request and obtain an update package) and then later be at a second location (i.e., in the vehicle 140) with the vehicle access point 240 (where it can transfer the update package to the vehicle computing device 244). The transfers can be transparent to a person operating the client device 128. The client device 128 can passively request the update package without interaction with the person operating the client device 128. For example, the client device 128 can passively transfer the update package to the vehicle computing device 244 without interaction with the person operating the client device 128. The client device 128 can also actively engage with the person operating the client device 128, e.g., providing notifications or alerts of update progress, or requesting explicit permission to proceed with a data transfer.

The client device 128 can be simultaneously connected to both the network access point 220 and the vehicle access point 240. In such circumstances, the client device 128 may transfer data from the update server 210 to the vehicle computing system 244 without storing data locally, or with only minimal local storage (e.g., buffering).

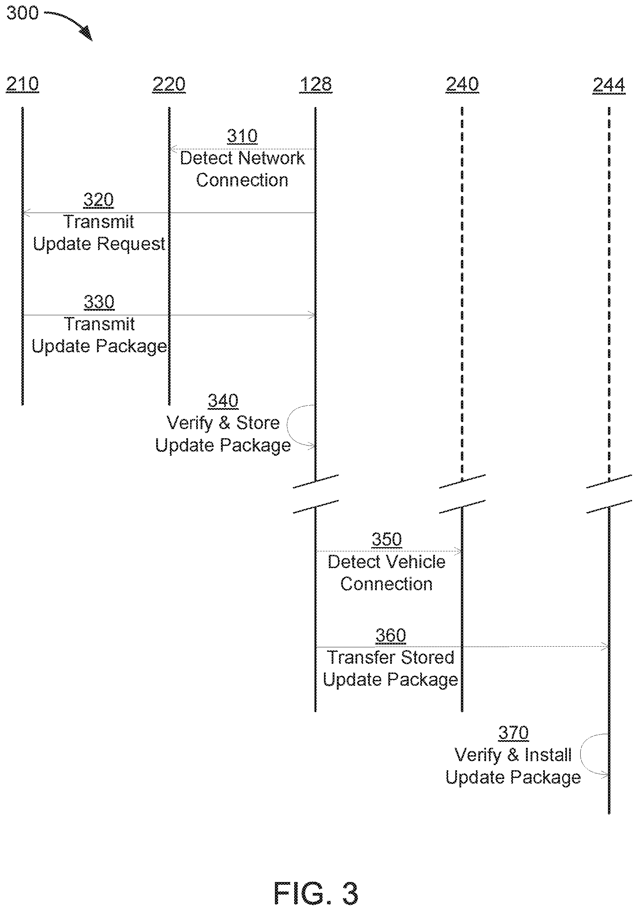

FIG. 3 is a ladder diagram of a data exchange 300 for installing an update package. In brief overview, a client device 128 detects (arrow 310) a network connection to the network access point 220 and uses the network access point 220 to transmit (arrow 320) an update request to an update server 210. The update server 210 responds (arrow 330) by transmitting an update package to the client device 128, which receives the update package from the update server 210 via the network access point 220. The client device 128 stores (arrow 340) the update package in local memory, for later use in updating functionality of the vehicle computing device 244. The client device 128 can perform one or more validations to verify the authenticity, validity, and integrity of the update package. At a later time, when the client device 128 has been moved into communication range of the vehicle computing device, the client device 128 detects (arrow 350) a connection to the vehicle access point 240 and transfers (arrow 360) the stored update package to the vehicle computing device 244 via the vehicle access point 240. The vehicle computing device 244 stores (arrow 370) the update package in local memory and uses it to update functionality of the vehicle computing device 244. The vehicle computing device 244 may, in some implementations, perform one or more validations to verify the authenticity, validity, and integrity of the update package. The vehicle computing device 244 can perform one or more validations to verify the success or failure of the update installation, and can roll-back a failed installation to revert the vehicle computing device 244 to a state prior to the installation. For example, the vehicle computing device 244 may capture a recovery image prior to installing the update and revert or roll-back to the recovery image in the event of a failed update installation.

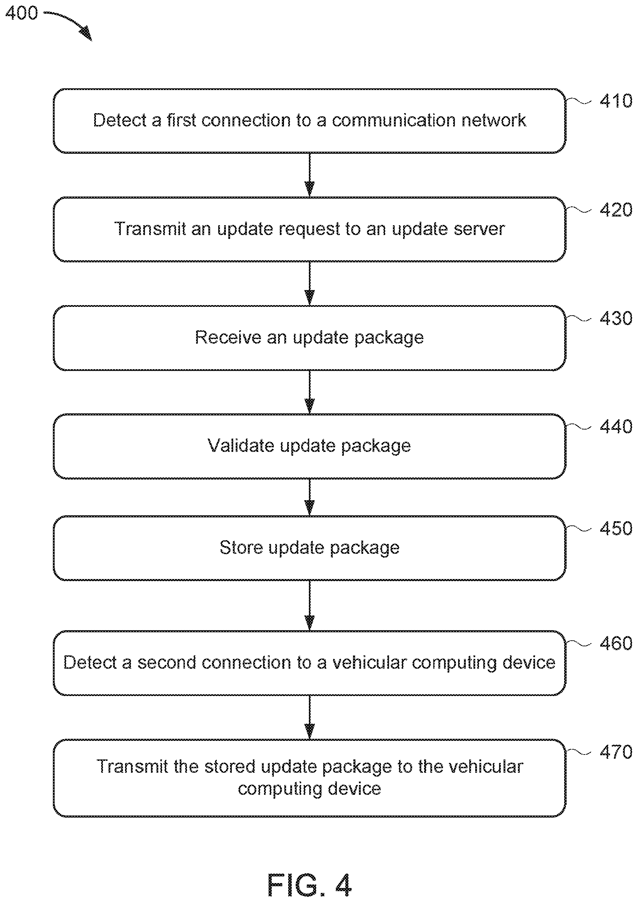

FIG. 4 is a flowchart of an example method 400 for transferring an update package. In broad overview, at act 410, the client device 128 detects a first connection to a communication network and, at act 420, transmits an update request to an update server via the communication network. At act 430, the client device 128 receives an update package responsive to the request. At act 440, the client device 128 can validate the received update package. At act 450, the client device 128 stores the update package in local memory. Portions of the update package may be stored as the update package is received; the order of these acts is not limiting. After the client device 128 has been moved into a vehicle 140, the client device 128 transfers the stored update image to the vehicular computing device 244. In particular, at act 460, the client device 128 detects a second connection, this time to the vehicular computing device 244 (or to the vehicular access point 240 for communication with the vehicular computing device 244) and at act 470, the client device 128 transmits the stored update package to the vehicular computing device 244.

At act 410, the client device 128 detects a first connection to a communication network. For example, the client device 128 may detect a connection to a network access point 220, as described above. The client device 128 can measure network connectivity to an update server 210. For example, the client device 128 may send a packet (e.g., a UDP "ping") to the update server 210 and measure a length of time until it receives a response. If the update server 210 responds within a threshold length of time, the client device 128 has detected a connection to the update server 210 via a communication network. The client device 128 can determine that the communication network is suitable for use (or not). For example, the client device 128 may be configured to avoid downloading update packages over mobile telephony networks to avoid data usage fees.

At act 420, transmits an update request to an update server via the communication network. The update request can specify the vehicular computing system 244 to be updated. The update request can specify functionalities of the vehicular computing system 244 to be updated. For example, in some implementations, the client device 128 run an application that manages updates for the vehicular computing device 244 and determines what needs to be updated. The client device 128 can manage updates for multiple vehicular computing devices 244.

At act 430, the client device 128 receives an update package responsive to the request. The client device 128 can receive the update package as a single data file. The client device 128 can receive the update package as a set of data files. The data files may include update data for one or more functionalities of the vehicular computing device 244. For example, the received update package may include map data for a navigation system, media content for an entertainment system, or modifications to vehicle utilities, for example. The received update package may include metadata describing how and when to install the updates. For example, the update package may include parameters indicating that particular updates can be applied at any time, only when a utility is not in use, only when the vehicle is parked, only when the vehicle is in a garage, and so forth. The received update package may include verification aides such as checksums, hash signatures, encrypted signatures, or estimated install time, for example. For example, the update server 210 may prepare a dataset for the update package responsive to an update request (e.g., the request transmitted in act 420) and create a hash of the dataset for inclusion in the update package. The update server 210 may include a cryptographic signature in the update package. For example, the update server 210 may include, in the update package, a copy of the hash of the dataset encrypted using a private asymmetrical encryption key for use as the cryptographic signature (this may then be verified using a corresponding public key, known to be authentic based on a third-party certificate or other chain of trust).

In some instances, transmission of the update package from the update server 210 to the client device 128 can be interrupted. The client device 128 can attempt to recover from the interruption by sending additional requests to the update server 210 and appending data to the received update package.

At act 440, the client device 128 can validate the received update package to verify the authenticity, validity, and integrity of the update package. An update package is authentic if it comes from an authentic source (i.e., if the update server 210 is authentic and the update package comes from the update server 210, then it too is authentic). An update package is valid if the update instructions contained in the update package are valid instructions. An update package has integrity if the transmission is complete and error free (i.e., if the update package sent by the update server 210 is identical to the update package received by the client device 128). For example, a checksum, file size, or hash may be used to confirm integrity. In some implementations, validation includes extracting a verification aide from the update package and using it to validate the update package. For example, the verification aide may be a hash of a dataset included in the update package; the client device 128 calculates a hash of the dataset and compares the calculated hash to the included hash to confirm that they match. The included hash can be cryptographically signed and the client device 128 uses a security certificate associated with a valid source of the update package to authenticate it. The update package is authentic if the signature is valid and has integrity if the hashes match. The client device 128 can analyse contents of the update package to confirm that the update is valid. For example, if the update package includes conflicting updates, the package may be invalid.

At act 450, the client device 128 stores the update package in local memory. The client device 128 can compress the update package. The update package can also be already compressed, e.g., by the update server 210. The client device 128 can decompresses the update package and store it in one or more files. For example, the update package may include updates for multiple systems and the client device 128 may store the updates as independent files. These files may, in turn, be update packages. The client device 128 can maintain enough free space to store the update package. The update server 210 can notify the client device 128 of the size of the update package and the client device 128 only proceeds with receiving the update package if enough space is available.

At act 460, the client device 128 detects a second connection, this time to the vehicular computing device 244 (or to the vehicular access point 240 for communication with the vehicular computing device 244). The second connection can use a short-range radio communication protocol such as BLUETOOTH or NFC. The client device 128 can be physically connected to the vehicular access point 240, e.g., using a wired link.

At act 470, the client device 128 can transmit the stored update package to the vehicular computing device 244. The client device 128 can download the update package to the vehicular computing device 244 slowly, over multiple connections. For example, if the connection to the vehicular computing device 244 is a low-bandwidth connection (e.g., BLUETOOTH), the transfer may take a significant length of time, which may be subject to interruptions.

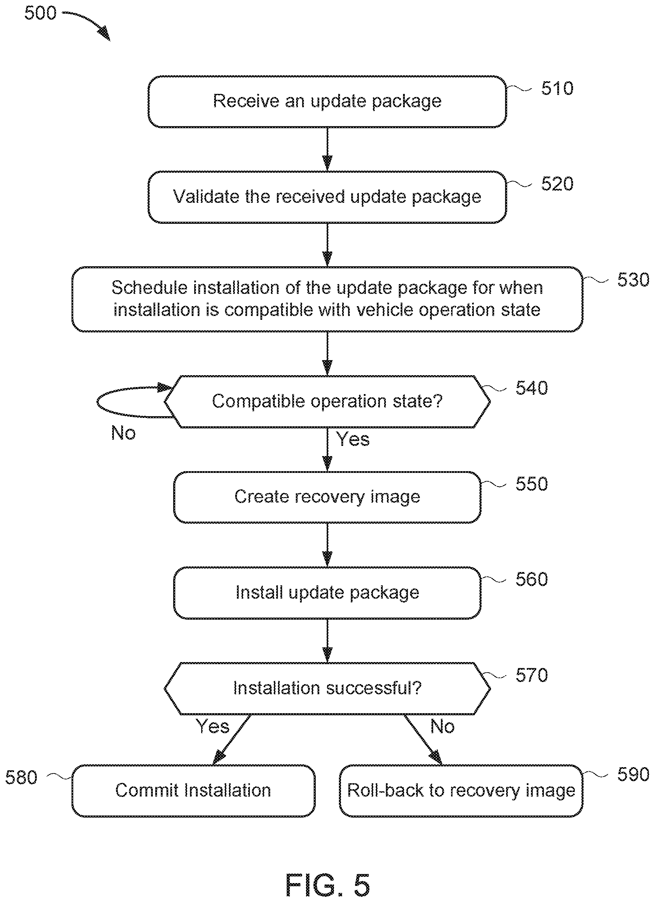

FIG. 5 is a flowchart of an example method 500 for installing an update package. In broad overview, at act 510, the vehicular computing device 244 receives the update package from the client device 128, e.g., as described above in reference to FIG. 4. At act 520, the vehicular computing device 244 can validate the received update package. At act 530, the vehicular computing device 244 schedules installation of the update package for when installation is compatible with vehicle operation state. At act 540, the vehicular computing device 244 determines whether the vehicle 140 (or the vehicle computing device 244) is in a state that is compatible with installation. If in a compatible operation state at act 540, then at act 550 the vehicular computing device 244 creates a recovery image. At act560, the vehicular computing device 244 installs the update package. At act 570, the vehicular computing device 244 determines whether the installation was successful. If installation was successful, then at act 580 the vehicular computing device 244 commits the installation. If installation was not successful, then at act 590 the vehicular computing device 244 rolls the installation back to the recovery image from act 550. This particular recovery strategy is provided as an example. In some implementations, alternative recovery strategies are used. For example, in some implementations, vehicular computing device 244 may maintain a modification log as installation steps are performed. The vehicle computing device 244 may, in some implementations, maintain data suitable for rolling-back to revert memory to a pre-update state.

At act 510, the vehicular computing device 244 receives the update package from the client device 128. For example, the client device 128 may transfer the update package to the vehicular computing device 244 using the method 400 described above in reference to FIG. 4.

At act 520, the vehicular computing device 244 can validate the received update package. The vehicular computing device 244 may validate the received update package to verify the authenticity, validity, and integrity of the update package. An update package can be authentic if it comes from an authentic source (i.e., if the update server 210 is authentic and the update package comes from the update server 210, then it too is authentic). An update package can be valid if the update instructions contained in the update package are valid instructions. An update package has integrity if the transmission is complete and error free (i.e., if the update package sent by the update server 210 is identical to the update package received by the vehicular computing device 244). For example, a checksum, file size, or hash may be used to confirm integrity. In some implementations, validation includes extracting a verification aide from the update package and using it to validate the update package. For example, the verification aide may be a hash of a dataset included in the update package; the vehicular computing device 244 calculates a hash of the dataset and compares the calculated hash to the included hash to confirm that they match. The included hash can be cryptographically signed and the vehicular computing device 244 uses a security certificate associated with a valid source of the update package to authenticate it. The update package is authentic if the signature is valid and has integrity if the hashes match. The vehicular computing device 244 can analyse contents of the update package to confirm that the update is valid. For example, if the update package includes conflicting updates, the package may be invalid. The client device 128 can validate the update package prior to transmitting it to the vehicular computing device 244, and the vehicular computing device 244 relies on evidence provided by the client device 128 of the validity.

At act 530, the vehicular computing device 244 schedules installation of the update package for when installation is compatible with vehicle operation state. The update package may indicate parameters or restrictions for when and how updates in the update package are installed. For example, an update to a navigation system may include a parameter requiring that the vehicle 140 be parked, or at least not be in motion, while the update is applied. The vehicular computing device 244 can schedule the installation by setting event interrupts triggered by installation requirements. For example, if an installation requires that the vehicle be parked, an interrupt may be triggered when the vehicular computing device 244 determines that the vehicle is parked and the interrupt can then be used to cause installation of updates. The vehicular computing device 244 can schedule installation for a time of day. For example, the installation may be scheduled for 3 AM, or another time when the vehicle 140 is most likely unused. The vehicular computing device 244 may schedule different updates from a single update package, each update scheduled independently. An update can be classified with a severity level, e.g., updates addressing the safety of the vehicle 140 may be more severe (more important) than updates to an entertainment function. The vehicular computing device 244 can prioritize installation of the more severe updates. Some updates may include installation restrictions, such as a restriction that a particular update not be installed while the vehicle 140 is being driven.

At act 540, the vehicular computing device 244 determines whether the vehicle 140 (or the vehicle computing device 244) is in a state that is compatible with installation. For example, the vehicular computing device 244 may determine whether the vehicle 140 has been parked. Different types of vehicles may have different characteristics that would logically be described as parked. The vehicular computing device 244 can detect one or more of these characteristics and determines whether the vehicle 140 is parked based on an analysis thereof. Some example characteristics, described in more detail below, include whether the vehicle 140 is in a mechanical or computerized state indicating that it is parked, whether the vehicle 140 is in motion, and whether the vehicle 140 is at a "home" location known to be a frequently used parking location. Additional or alternative characteristics may be used. The vehicular computing device 244 can assign each characteristic a confidence score representing measurements for the respective characteristic and a correspond weight for whether the measurement indicates that the vehicle is park. The vehicular computing device 244 can then use an aggregation of the confidence scores to determine a likelihood that the vehicle 140 is parked.

One example characteristic that may be used for determining whether a vehicle is parked is whether the vehicle 140 is in a mechanical or computerized state indicating that it is parked. For example, common personal automobiles with an internal combustion engine use a gearing system and a transmission for shifting gears. The transmission may be automatic or manual. An automatic transmission may have a "park" setting on the automatic transmission; shifting such a vehicle into "park" may indicate that the vehicle is parked, which may be further indicate by application of a parking brake. One or more sensors 130, e.g., a transmission sensor, may detect that the transmission is in park or that a parking brake has been applied. On the other hand, a manual transmission does not have a "park" setting. Such a vehicle might be considered parked if the vehicle is in gear (the clutch is not engaged) and (in some instances) the parking brake is applied. Some electric engine automobiles do not have a gearing system and thus don't have a transmission. Some such electric engine automobiles have a driver interface for "shifting" the vehicle into neutral or park; however, the act of shifting modifies a computer control setting for the electric engine, and is not a transmission action. Even so, the vehicle has a detectable state of "parked" when the computer control setting designates that the vehicle is parked. Further, the electric vehicle may have a parking brake, where application of the parking brake may be detectable evidence that the vehicle is parked. The vehicle 140 can include a sensor 130 for sensing a status of the transmission, where the transmission status sensor can indicate a transmission state of parked. The transmission status sensor is a virtual sensor for a virtual transmission, e.g., on a vehicle that does not have a physical transmission (such as an electric automobile).

Another example characteristic that may be used for determining whether a vehicle is parked is whether the vehicle 140 is at a "home" location known to be a frequently used parking location. For example, the vehicle 140 may have a sensor 130 for using satellite signals to determine location. Examples of system satellite-based location services (also known as global navigation satellite systems, "GNSS") include the U.S. Global Positioning System ("GPS"), the Russian Global Navigation Satellite System ("GLONASS"), and the European Union's Galileo system. If the determined location is a "home" parking location, the vehicle may be parked. The vehicular computing device 244 may be in communication with a beacon or network access point associated with a "home" location and the vehicular computing device 244 may use this communication as evidence that the vehicle is in the associated "home" location. The "home" parking location is programmatically configured, e.g., by a vehicle operator or owner. The "home" parking location can be learned, e.g., using a machine learning algorithm. The "home" parking location may be an owner or operator's residence, place of business, or any other location the vehicle 140 is regularly or routinely parked. A vehicle 140 may have multiple "home" parking locations.

Another example characteristic that may be used for determining whether a vehicle is parked is whether the vehicle 140 is in motion. The vehicle 140 may include one or more sensor 130 for detecting motion. For example, a sensor 130 may be in communication with an odometer for the vehicle, and may determine whether the odometer is measuring an increase in distance traveled over a small increment of time (e.g., a second or a fraction of a second). The vehicle 130 has a sensor 130 for using satellite signals to determine location and the vehicular computing device 244 uses a rate of change in location to determine to whether the vehicle is in motion. Some satellite-based location systems have accuracy to within a few meters, which may be inadequate for detecting small movements but may be sufficiently accurate for detecting larger movements. That is, the satellite-based location system may be a useful failsafe to confirm other measurements. The vehicle 140 can include a motion sensor such as an accelerometer. The client device 128 can include a motion sensor such as an accelerometer, and the vehicle 140 may be in communication with the client device 128 such that it can use the motion sensor of the client device 128 to determine that the vehicle 140 is not in motion. The motion sensor can be connected to a drivetrain for the vehicle 140 and can detect whether the vehicle 140 is sending power to the wheels of the vehicle 140. The vehicle 140 can include on-board diagnostics ("OBD") or on-board diagnostics type 2 ("OBD-II") port for connection to maintenance equipment (e.g., in an auto-shop). For example, a dongle may be connected to the OBD or OBD-II port, and the dongle may report motion data from the vehicle 140 to either or both of the vehicular computing device 244 and the client device 128.

At act 550 the vehicular computing device 244 creates a recovery image. The vehicular computing device 244 can save a copy of software or firmware to be updated such that, in the event of an installation failure, the copy can be used to undo the installation. The vehicular computing device 244 can maintain a mirror copy of modifiable data, such that an installation to one copy is only applied to the other copy on a commit; that is, the mirror is a recovery image.

At act 560, the vehicular computing device 244 installs the update package. In some implementations, the update package includes a set of update instructions for installing or modifying functionality provided by the vehicular computing device 244. The update package may include blocks of binary data to be written to particular memory locations. The update package may include instruction for a sequence of installation steps. The update package may include data files to be copied to specific data management locations. The update package may include compressed data and instructions to decompress the compressed data. The update package may include instructions for updates to multiple applications, such that each update may be applied independently.

At act 570, the vehicular computing device 244 determines whether the installation was successful. An update package can include a test sequence for verifying a successful installation. For example, an application may have been successfully installed if the application can be started. The update package can include one or more diagnostics for verifying a successful installation. The vehicular computing device 244 can include a self-diagnostic routine for confirming that the vehicular computing device 244 is in a proper operating state.

At act 580, if installation was successful, the vehicular computing device 244 commits the installation. The vehicular computing device 244 can delete the recovery image. The vehicular computing device 244 can copy a primary dataset over a mirror image of the dataset. The vehicular computing device 244 can set a flag indicating a successful installation. The vehicular computing device 244 can update a catalog of installed version numbers.

At act 590, if installation was not successful, the vehicular computing device 244 rolls the installation back to the recovery image from act 550. For example, the vehicular computing device 244 may overwrite the installed instructions using a recovery image. The vehicular computing device 244 can generate an error message to be propagated back to the update server 210 (e.g., via the client device 128) in the event of a failed installation.

FIG. 6 is a block diagram illustrating a general architecture for a computer system 600 that may be employed to implement elements of the systems and methods described and illustrated herein. The computer system or computing device 600 can include or be used to implement the system 100 or its components such as the data processing system 105. The computing system 600 includes a bus 605 or other communication component for communicating information and a processor 610 or processing circuit coupled to the bus 605 for processing information. The computing system 600 can also include one or more processors 610 or processing circuits coupled to the bus for processing information. The computing system 600 also includes main memory 615, such as a random access memory ("RAM") or other dynamic storage device, coupled to the bus 605 for storing information, and instructions to be executed by the processor 610. The main memory 615 can be or include the data repository 145. The main memory 615 can also be used for storing position information, temporary variables, or other intermediate information during execution of instructions by the processor 610. The computing system 600 may further include a read only memory (ROM) 620 or other static storage device coupled to the bus 605 for storing static information and instructions for the processor 610. A storage device 625, such as a solid state device, magnetic disk or optical disk, can be coupled to the bus 605 to persistently store information and instructions. The storage device 625 can include or be part of the data repository 118.

The computing system 600 may be coupled via the bus 605 to a display 635, such as a liquid crystal display, or active matrix display, for displaying information to a user. An input device 630, such as a keyboard including alphanumeric and other keys, may be coupled to the bus 605 for communicating information and command selections to the processor 610. The input device 630 can include a touch screen display 635. The input device 630 can also include a cursor control, such as a mouse, a trackball, or cursor direction keys, for communicating direction information and command selections to the processor 610 and for controlling cursor movement on the display 635. The display 635 can be part of the data processing system 102, the client computing device 128 or other component of FIG. 1A, for example.

The processes, systems and methods described herein can be implemented by the computing system 600 in response to the processor 610 executing an arrangement of instructions contained in main memory 615. Such instructions can be read into main memory 615 from another computer-readable medium, such as the storage device 625. Execution of the arrangement of instructions contained in main memory 615 causes the computing system 600 to perform the illustrative processes described herein. One or more processors in a multiprocessing arrangement may also be employed to execute the instructions contained in main memory 615. Hard-wired circuitry can be used in place of or in combination with software instructions together with the systems and methods described herein. Systems and methods described herein are not limited to any specific combination of hardware circuitry and software.

Although an example computing system has been described in FIG. 6, the subject matter including the operations described in this specification can be implemented in other types of digital electronic circuitry, or in computer software, firmware, or hardware, including the structures disclosed in this specification and their structural equivalents, or in combinations of one or more of them.

The described client device 128 may act as a courier or intermediary device between the vehicular computing device 244 and an update server 210. In some implementations, the client device 128 may also have applications installed thereon that interact with the vehicular computing device 244. Updates for such applications may be coordinated so as to update both the elements installed on the client device 128 and corresponding elements installed at the vehicular computing device 244 in a coordinated manner. In some implementations, the applications installed on the client device 128 may independently generate requests for updates. The applications installed on the client device 128 can interact with a coordinator application on the client device 128, and the coordinator application may generate a unified update request.

As described, because the client device 128 acts as a courier for the transfer of data to the vehicular computing device 244, the vehicular computing device 244 does not need a separate data connection (e.g., a mobile telephony data plan) to support the described updates. However, the vehicular computing device 244 may have access to a second data connection (e.g., a mobile telephony data plan) and may augment the update using the second data connection. For example, the update package may include update data along with instructions for the vehicular computing device 244 to contact the update server 210 for installation steps or verification steps, e.g., out-of-band authentication or validation steps.

The client device 128 or the vehicular computing device 244 can present a user interface enabling an owner, operator, driver, or passenger of the vehicle 140 to control an update process. For example, the user interface may allow for scheduling an update, initiating an update, authorizing an update, pausing an update, resuming an update, or terminating an update. In some implementations, the user interface is voice controlled, e.g., via an voice controlled assistant application.

For situations in which the systems discussed herein collect personal information about users, or may make use of personal information, the users may be provided with an opportunity to control whether programs or features that may collect personal information (e.g., information about a user's social network, social actions or activities, a user's preferences, or a user's location), or to control whether or how to receive content from a content server or other data processing system that may be more relevant to the user. In addition, certain data may be anonymized in one or more ways before it is stored or used, so that personally identifiable information is removed when generating parameters. For example, a user's identity may be anonymized so that no personally identifiable information can be determined for the user, or a user's geographic location may be generalized where location information is obtained (such as to a city, postal code, or state level), so that a particular location of a user cannot be determined. Thus, the user may have control over how information is collected about him or her and used by the content server.

The subject matter and the operations described in this specification can be implemented in digital electronic circuitry, or in computer software, firmware, or hardware, including the structures disclosed in this specification and their structural equivalents, or in combinations of one or more of them. The subject matter described in this specification can be implemented as one or more computer programs, e.g., one or more circuits of computer program instructions, encoded on one or more computer storage media for execution by, or to control the operation of, data processing apparatuses. Alternatively or in addition, the program instructions can be encoded on an artificially generated propagated signal, e.g., a machine-generated electrical, optical, or electromagnetic signal that is generated to encode information for transmission to suitable receiver apparatus for execution by a data processing apparatus. A computer storage medium can be, or be included in, a computer-readable storage device, a computer-readable storage substrate, a random or serial access memory array or device, or a combination of one or more of them. While a computer storage medium is not a propagated signal, a computer storage medium can be a source or destination of computer program instructions encoded in an artificially generated propagated signal. The computer storage medium can also be, or be included in, one or more separate components or media (e.g., multiple CDs, disks, or other storage devices). The operations described in this specification can be implemented as operations performed by a data processing apparatus on data stored on one or more computer-readable storage devices or received from other sources.

The terms "data processing system" "computing device" "component" or "data processing apparatus" encompass various apparatuses, devices, and machines for processing data, including by way of example a programmable processor, a computer, a system on a chip, or multiple ones, or combinations of the foregoing. The apparatus can include special purpose logic circuitry, e.g., an FPGA (field programmable gate array) or an ASIC (application specific integrated circuit). The apparatus can also include, in addition to hardware, code that creates an execution environment for the computer program in question, e.g., code that constitutes processor firmware, a protocol stack, a database management system, an operating system, a cross-platform runtime environment, a virtual machine, or a combination of one or more of them. The apparatus and execution environment can realize various different computing model infrastructures, such as web services, distributed computing and grid computing infrastructures. The described computing devices, including the client device 128, the data processing system 102 components, and the vehicular computing device 244 can include or share one or more data processing apparatuses, systems, computing devices, or processors.

A computer program (also known as a program, software, software application, app, script, or code) can be written in any form of programming language, including compiled or interpreted languages, declarative or procedural languages, and can be deployed in any form, including as a stand-alone program or as a module, component, subroutine, object, or other unit suitable for use in a computing environment. A computer program can correspond to a file in a file system. A computer program can be stored in a portion of a file that holds other programs or data (e.g., one or more scripts stored in a markup language document), in a single file dedicated to the program in question, or in multiple coordinated files (e.g., files that store one or more modules, sub-programs, or portions of code). A computer program can be deployed to be executed on one computer or on multiple computers that are located at one site or distributed across multiple sites and interconnected by a communication network.

The processes and logic flows described in this specification can be performed by one or more programmable processors executing one or more computer programs (e.g., components of the data processing system 102) to perform actions by operating on input data and generating output. The processes and logic flows can also be performed by, and apparatuses can also be implemented as, special purpose logic circuitry, e.g., an FPGA (field programmable gate array) or an ASIC (application-specific integrated circuit). Devices suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks. The processor and the memory can be supplemented by, or incorporated in, special purpose logic circuitry.

The subject matter described herein can be implemented in a computing system that includes a back-end component, e.g., as a data server, or that includes a middleware component, e.g., an application server, or that includes a front-end component, e.g., a client computer having a graphical user interface or a web browser through which a user can interact with an implementation of the subject matter described in this specification, or a combination of one or more such back-end, middleware, or front-end components. The components of the system can be interconnected by any form or medium of digital data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

The computing systems described may include clients and servers. A client and server are generally remote from each other and typically interact through a communication network (e.g., the network 142). The relationship of client and server arises by virtue of computer programs running on the respective computers and having a client-server relationship to each other. In some implementations, a server transmits data (e.g., data packets representing a content item) to a client device (e.g., for purposes of presenting data to and receiving user input from a user interacting with the client device). Data generated at the client device (e.g., a result of the user interaction) can be received from the client device at the server (e.g., received by the data processing system 102 from the client computing device).

While operations are depicted in the drawings in a particular order, such operations are not required to be performed in the particular order shown or in sequential order, and all illustrated operations are not required to be performed. Actions described herein can be performed in a different order.

The separation of various system components does not require separation in all implementations, and the described program components can be included in a single hardware or software product. For example, certain components can be a single component, app, or program, or a logic device having one or more processing circuits, or part of one or more servers of the data processing system 102.

Having now described some illustrative implementations, it is apparent that the foregoing is illustrative and not limiting, having been presented by way of example. In particular, although many of the examples presented herein involve specific combinations of method acts or system elements, those acts and those elements may be combined in other ways to accomplish the same objectives. Acts, elements and features discussed in connection with one implementation are not intended to be excluded from a similar role in other implementations or implementations.

The phraseology and terminology used herein is for the purpose of description and should not be regarded as limiting. The use of "including" "comprising" "having" "containing" "involving" "characterized by" "characterized in that" and variations thereof herein, is meant to encompass the items listed thereafter, equivalents thereof, and additional items, as well as alternate implementations consisting of the items listed thereafter exclusively. In one implementation, the systems and methods described herein consist of one, each combination of more than one, or all of the described elements, acts, or components.

Any references to implementations or elements or acts of the systems and methods herein referred to in the singular may also embrace implementations including a plurality of these elements, and any references in plural to any implementation or element or act herein may also embrace implementations including only a single element. References in the singular or plural form are not intended to limit the presently disclosed systems or methods, their components, acts, or elements to single or plural configurations. References to any act or element being based on any information, act or element may include implementations where the act or element is based at least in part on any information, act, or element.

Any implementation disclosed herein may be combined with any other implementation or embodiment, and references to "an implementation," "some implementations," "one implementation" or the like are not necessarily mutually exclusive and are intended to indicate that a particular feature, structure, or characteristic described in connection with the implementation may be included in at least one implementation or embodiment. Such terms as used herein are not necessarily all referring to the same implementation. Any implementation may be combined with any other implementation, inclusively or exclusively, in any manner consistent with the aspects and implementations disclosed herein.

References to "or" may be construed as inclusive so that any terms described using "or" may indicate any of a single, more than one, and all of the described terms. For example, a reference to "at least one of 'A' and 'B'" can include only 'A', only 'B', as well as both 'A' and 'B'. Such references used in conjunction with "comprising" or other open terminology can include additional items.

Where technical features in the drawings, detailed description or any claim are followed by reference signs, the reference signs have been included to increase the intelligibility of the drawings, detailed description, and claims. Accordingly, neither the reference signs nor their absence have any limiting effect on the scope of any claim elements.

The systems and methods described herein may be embodied in other specific forms without departing from the appended claims. The foregoing implementations are illustrative rather than limiting of the described systems and methods. Scope of the systems and methods described herein is thus indicated by the appended claims, rather than the foregoing description, and changes that come within the meaning of the claims are embraced therein.

## Claims

1. A system to update functionality of vehicular computing devices (244), comprising:
a mobile computing device (128), independent from a vehicular computing device installed in a vehicle (140), the mobile computing device comprising a re-writeable computer-readable memory, one or more communication interfaces, and a processor to:
responsive to detection of a first connection to a communication network via at least one of the one or more communication interfaces:
transmit an update request, via the communication network, to an update server;
receive an update package responsive to the update request; and
store the received update package in the re-writeable computer-readable memory; and
responsive to detection of a second connection to the vehicular computing device via at least one of the one or more communication interfaces:
transfer the stored update package from the re-writeable computer-readable memory to the vehicular computing device for installation; and
the vehicular computing device configured to:
schedule installation of the update package for a time where the installation is compatible with at least one of operation of the vehicular computing device and operation of the vehicle, wherein the installation is compatible with at least one of operation of the vehicular computing device and operation of the vehicle when the vehicle is determined to be parked; and
determine that the vehicle is parked based on a location sensor (130) in at least one of the vehicle and the vehicular computing device indicating that the vehicle is at a parking location at which the vehicle is regularly or routinely parked.

2. The system of claim 1, wherein the mobile computing device is configured to passively transmit the update request without interaction with a person operating the mobile computing device, and to passively transfer the update package to the vehicular computing device without interaction with the person operating the mobile computing device.

3. The system of claim 1, wherein at least one of the mobile computing device and the vehicular computing device validates the update package using a security certificate associated with a valid source of the update package, and optionally:
wherein the vehicular computing device is configured to validate the update package prior to installing the update package.

4. The system of claim 1, comprising:
the vehicular computing device configured to:
verify installation of the update package prior to committing installation of the update package;
determine, from the verification, that the update package failed to install properly; and
roll-back installation of the update package responsive to the determination that the update package failed to install properly.

5. The system of claim 1, wherein the time where the installation is compatible with at least one of operation of the vehicular computing device and operation of the vehicle includes a parameter for a functionality of the vehicle to be updated is not in use.

6. The system of claim 1, wherein at least one of the vehicle and the vehicular computing device comprises a transmission status sensor and a motion sensor, the vehicular computing device further configured to determine that the vehicle is parked based on a combination of data elements from one or more of the transmission status sensor and the motion sensor, wherein the combination of data elements is one or more of:
the transmission status sensor indicates a transmission state of parked; and
the motion sensor confirms that motion of the vehicle is below a threshold.

7. The system of claim 1, wherein the location sensor is a satellite-based location system, and the motion sensor is connected to one of at least one of a drivetrain for the vehicle and an odometer for the vehicle.

8. The system of claim 1, comprising:
a data element that stores a set of parking locations at which the vehicle is regularly or routinely parked, each location in the set of parking locations identified by the vehicular computing device using a machine learning algorithm.

9. A method to update functionality of vehicular computing devices, comprising:
detecting, by a mobile computing device independent from a vehicular computing device installed in a vehicle, a first connection to a communication network;
transmitting, by the mobile computing device responsive to detecting the first connection, an update request, via the communication network, to an update server;
receiving an update package responsive to the update request;
storing the received update package in a memory element of the mobile computing device;
detecting, by the mobile computing device, a second connection to the vehicular computing device; and
transferring the stored update package from the memory element of the mobile computing device to the vehicular computing device for installation,
wherein the vehicular computing device is configured to:
schedule installation of the update package for a time where the installation is compatible with at least one of operation of the vehicular computing device and operation of the vehicle, wherein the installation is compatible with at least one of operation of the vehicular computing device and operation of the vehicle when the vehicle is determined to be parked; and
determine that the vehicle is parked based on a location sensor (130) in at least one of the vehicle and the vehicular computing device indicating that the vehicle is at a parking location at which the vehicle is regularly or routinely parked.

10. The method of claim 9, comprising:
passively transmitting the update request without interaction with a person operating the mobile computing device; and
passively transferring the update package to the vehicular computing device, without confirmatory interaction without interaction with the person operating the mobile computing device.

11. The method of claim 9, comprising:
validating the update package using a security certificate associated with a valid source of the update package, and optionally:
wherein the vehicular computing device is configured to validate the update package prior to installing the update package.

12. The method of claim 9, wherein the vehicular computing device is configured to:
verify installation of the update package prior to committing installation of the update package;
determine, from the verification, that the update package failed to install properly; and
roll-back installation of the update package responsive to the determination that the update package failed to install properly.

13. The method of claim 9, wherein the time where the installation is compatible with at least one of operation of the vehicular computing device and operation of the vehicle includes a parameter for a functionality of the vehicle to be updated is not in use, and/or:
wherein at least one of the vehicle and the vehicular computing device comprises a transmission status sensor and a motion sensor, the vehicular computing device further configured to determine that the vehicle is parked based on a combination of data elements from one or more of the transmission status sensor, and the motion sensor, wherein the combination of data elements is one or more of:
the transmission status sensor indicates a transmission state of parked; and
the motion sensor confirms that motion of the vehicle is below a threshold.

14. The method of claim 9, wherein the location sensor is a satellite-based location system, and the motion sensor is connected to one of either a drivetrain for the vehicle or an odometer for the vehicle.

15. The method of claim 9, wherein at least one of the vehicle and the vehicular computing device comprises a data element storing a set of parking locations at which the vehicle is regularly or routinely parked, each location in the set of parking locations identified by the vehicular computing device using a machine learning algorithm.

## Patentansprüche

1. System zum Aktualisieren der Funktionalität von Fahrzeugcomputergeräten (244), umfassend:
ein mobiles Computergerät (128), das unabhängig von einem Fahrzeugcomputergerät ist, das in einem Fahrzeug (140) installiert ist, wobei das mobile Computergerät einen wiederbeschreibbaren computerlesbaren Speicher, eine oder mehrere Kommunikationsschnittstellen und einen Prozessor umfasst, zum:
in Reaktion auf die Erfassung einer ersten Verbindung zu einem Kommunikationsnetzwerk über zumindest eine der einen oder mehreren Kommunikationsschnittstellen:
Senden einer Aktualisierungsanforderung über das Kommunikationsnetzwerk an einen Aktualisierungsserver;
Empfangen eines Aktualisierungspakets in Reaktion auf die Aktualisierungsanforderung; und
Speichern des empfangenen Aktualisierungspakets im wiederbeschreibbaren computerlesbaren Speicher; und
in Reaktion auf die Erfassung einer zweiten Verbindung zu dem Fahrzeugcomputergerät über zumindest eine der einen oder mehreren Kommunikationsschnittstellen:
Übertragen des gespeicherten Aktualisierungspakets vom wiederbeschreibbaren computerlesbaren Speicher zum Fahrzeugcomputergerät zur Installation; und
das Fahrzeugcomputergerät, das konfiguriert ist zum:
Planen der Installation des Aktualisierungspakets für eine Zeit, in der die Installation mit zumindest einem von dem Betrieb des Fahrzeugcomputergeräts und dem Betrieb des Fahrzeugs kompatibel ist, wobei die Installation mit zumindest einem von dem Betrieb des Fahrzeugcomputergeräts und dem Betrieb des Fahrzeugs kompatibel ist, wenn ermittelt wird, dass das Fahrzeug geparkt wird; und
Ermitteln, dass das Fahrzeug basierend auf einem Ortssensor (130) in zumindest einem von dem Fahrzeug und dem Fahrzeugcomputergerät geparkt ist, die angeben, dass sich das Fahrzeug an einem Parkort befindet, an dem das Fahrzeug regelmäßig oder routinemäßig geparkt ist.

2. System nach Anspruch 1, wobei das mobile Computergerät so konfiguriert ist, dass es die Aktualisierungsanforderung ohne Interaktion mit einer das mobile Computergerät bedienenden Person passiv überträgt und das Aktualisierungspaket ohne Interaktion mit der das mobile Computergerät bedienenden Person passiv an das Fahrzeug-Computergerät überträgt.

3. System nach Anspruch 1, wobei zumindest eines von dem mobilen Computergerät und dem Fahrzeugcomputergerät das Aktualisierungspaket unter Verwendung eines Sicherheitszertifikats validiert, das mit einer gültigen Quelle des Aktualisierungspakets assoziiert ist, und optional:
wobei das Fahrzeugcomputergerät konfiguriert ist, das Aktualisierungspaket vor der Installation des Aktualisierungspakets zu validieren.

4. System nach Anspruch 1, umfassend:
das Fahrzeugcomputergerät, das konfiguriert ist zum:
Verifizieren der Installation des Aktualisierungspakets vor der Festlegung zur Durchführung der Installation des Aktualisierungspakets;
Ermitteln aus der Verifizierung, dass das Aktualisierungspaket nicht korrekt installiert wurde; und
Roll-Back-Installation des Aktualisierungspakets in Reaktion auf die Ermittlung, dass das Aktualisierungspaket nicht korrekt installiert wurde.

5. System nach Anspruch 1, wobei die Zeit, zu der die Installation mit zumindest einem von dem Betrieb des Fahrzeugcomputergeräts und dem Betrieb des Fahrzeugs kompatibel ist, einen Parameter für eine Funktionalität des zu aktualisierenden Fahrzeugs beinhaltet, die nicht in Gebrauch ist.

6. System nach Anspruch 1, wobei zumindest eines von dem Fahrzeug und dem Fahrzeugcomputergerät einen Getriebestatussensor und einen Bewegungssensor umfasst, wobei das Fahrzeugcomputergerät ferner so konfiguriert ist, dass es basierend auf einer Kombination von Datenelementen von einem oder mehreren von dem Getriebestatussensor und dem Bewegungssensor ermittelt, dass das Fahrzeug geparkt ist, wobei die Kombination von Datenelementen eines oder mehrere von Folgendem ist:
der Getriebestatussensor zeigt einen Getriebestatus des Parkens an; und
der Bewegungssensor bestätigt, dass die Bewegung des Fahrzeugs unter einem Schwellenwert liegt.

7. System nach Anspruch 1, wobei der Ortssensor ein satellitenbasiertes Ortssystem ist und der Bewegungssensor mit zumindest einem von einem Antriebsstrang für das Fahrzeug und einem Wegmesser für das Fahrzeug verbunden ist.

8. System nach Anspruch 1, umfassend:
ein Datenelement, das einen Satz von Parkorten speichert, an dem das Fahrzeug regelmäßig oder routinemäßig geparkt wird, wobei jeder Ort in dem Satz von Parkorten, der durch das Fahrzeugcomputergerät identifiziert wird, einen maschinellen Lernalgorithmus verwendet.

9. Verfahren zum Aktualisieren der Funktionalität von Fahrzeugcomputergeräten, umfassend:
Erfassen, durch ein mobiles Computergerät, das unabhängig von einem in einem Fahrzeug installierten Fahrzeugcomputergerät ist, einer ersten Verbindung mit einem Kommunikationsnetzwerk;
Übertragen, durch das mobile Computergerät, in Reaktion auf das Erfassen der ersten Verbindung, einer Aktualisierungsanforderung über das Kommunikationsnetzwerk an einen Aktualisierungsserver;
Empfangen eines Aktualisierungspakets in Reaktion auf die Aktualisierungsanforderung;
Speichern des empfangenen Aktualisierungspakets in einem Speicherelement des mobilen Computergeräts;
Erfassen, durch das mobile Computergerät, einer zweiten Verbindung mit dem Fahrzeugcomputergerät; und
Übertragen des gespeicherten Aktualisierungspakets von dem Speicherelement des mobilen Computergeräts zu dem Fahrzeugcomputergerät zur Installation,
wobei das Fahrzeug-Computergerät konfiguriert ist zum:
Planen der Installation des Aktualisierungspakets für eine Zeit, in der die Installation mit zumindest einem von dem Betrieb des Fahrzeugcomputergeräts und dem Betrieb des Fahrzeugs kompatibel ist, wobei die Installation mit zumindest einem von dem Betrieb des Fahrzeugcomputergeräts und dem Betrieb des Fahrzeugs kompatibel ist, wenn ermittelt wird, dass das Fahrzeug geparkt wird; und
Ermitteln, dass das Fahrzeug basierend auf einem Ortssensor (130) in zumindest einem von dem Fahrzeug und dem Fahrzeugcomputergerät geparkt ist, die angeben, dass sich das Fahrzeug an einem Parkort befindet, an dem das Fahrzeug regelmäßig oder routinemäßig geparkt ist.

10. Verfahren nach Anspruch 9, umfassend:
passives Übertragen der Aktualisierungsanforderung ohne Interaktion mit einer das mobile Computergerät bedienenden Person; und
passives Übertragen des Aktualisierungspakets an das Fahrzeugcomputergerät ohne bestätigende Interaktion ohne Interaktion mit der das mobile Computergerät bedienenden Person.

11. Verfahren nach Anspruch 9, umfassend:
Validieren des Aktualisierungspakets unter Verwendung eines Sicherheitszertifikats, das mit einer gültigen Quelle des Aktualisierungspakets assoziiert ist, und optional:
wobei das Fahrzeugcomputergerät konfiguriert ist, das Aktualisierungspaket vor der Installation des Aktualisierungspakets zu validieren.

12. Verfahren nach Anspruch 9, wobei das Computergerät ferner konfiguriert ist zum:
Verifizieren der Installation des Aktualisierungspakets vor der Festlegung zur Durchführung der Installation des Aktualisierungspakets;
Ermitteln aus der Verifizierung, dass das Aktualisierungspaket nicht korrekt installiert wurde; und
Roll-Back-Installation des Aktualisierungspakets in Reaktion auf die Ermittlung, dass das Aktualisierungspaket nicht korrekt installiert wurde.

13. Verfahren nach Anspruch 9, wobei die Zeit, zu der die Installation mit zumindest einem von dem Betrieb des Fahrzeugcomputergeräts und dem Betrieb des Fahrzeugs kompatibel ist, einen Parameter für eine Funktionalität des zu aktualisierenden Fahrzeugs beinhaltet, die nicht in Gebrauch ist; und/oder:
wobei zumindest eines von dem Fahrzeug und dem Fahrzeugcomputergerät einen Getriebestatussensor und einen Bewegungssensor umfasst, wobei das Fahrzeugcomputergerät ferner konfiguriert ist, zu ermitteln, dass das Fahrzeug basierend auf einer Kombination von Datenelementen von einem oder mehreren von dem Getriebestatussensor und dem Bewegungssensor geparkt ist, wobei die Kombination von Datenelementen eines oder mehrere von Folgendem ist:
der Getriebestatussensor zeigt einen Getriebestatus des Parkens an; und
der Bewegungssensor bestätigt, dass die Bewegung des Fahrzeugs unter einem Schwellenwert liegt.

14. Verfahren nach Anspruch 9, wobei der Ortssensor ein satellitenbasiertes Ortssystem ist und der Bewegungssensor entweder mit einem Antriebsstrang für das Fahrzeug oder einem Wegstreckenmesser für das Fahrzeug verbunden ist.

15. Verfahren nach Anspruch 9, wobei zumindest eines von dem Fahrzeug und dem Fahrzeugcomputergerät ein Datenelement umfasst, das einen Satz von Parkorten speichert, an denen das Fahrzeug regelmäßig oder routinemäßig geparkt wird, wobei jeder Ort in dem Satz von Parkorten, die durch das Fahrzeugcomputergerät identifiziert werden, einen maschinellen Lernalgorithmus verwendet.

## Revendications

1. Système pour mettre à jour la fonctionnalité de dispositifs informatiques de véhicule (244), comprenant :
un dispositif informatique mobile (128), indépendant d'un dispositif informatique de véhicule installé dans un véhicule (140), le dispositif informatique mobile comprenant une mémoire réinscriptible lisible par ordinateur, une ou plusieurs interfaces de communication et un processeur pour :
en réponse à la détection d'une première connexion à un réseau de communication via au moins l'une des une ou plusieurs interfaces de communication :
transmettre une demande de mise à jour, via le réseau de communication, à un serveur de mise à jour ;
recevoir un paquet de mise à jour en réponse à la demande de mise à jour ; et
stocker le paquet de mise à jour reçu dans la mémoire réinscriptible lisible par ordinateur ; et
en réponse à la détection d'une deuxième connexion à un dispositif informatique de véhicule via au moins l'une des une ou plusieurs interfaces de communication :
transférer le paquet de mise à jour stocké depuis la mémoire réinscriptible lisible par ordinateur vers le dispositif informatique de véhicule pour installation ; et
le dispositif informatique de véhicule configuré pour :
programmer l'installation du paquet de mise à jour pour un moment auquel l'installation est compatible avec au moins l'un parmi le fonctionnement du dispositif informatique de véhicule et le fonctionnement du véhicule, dans lequel l'installation est compatible avec au moins l'un parmi le fonctionnement du dispositif informatique de véhicule et le fonctionnement du véhicule lorsque le véhicule est déterminé comme étant stationné ; et
déterminer que le véhicule est stationné sur la base d'un capteur de localisation (130) dans au moins l'un parmi le véhicule et le dispositif informatique de véhicule indiquant que le véhicule est au niveau d'une localisation de stationnement à laquelle le véhicule est régulièrement ou couramment stationné.

2. Système selon la revendication 1, dans lequel le dispositif informatique mobile est configuré pour transmettre passivement la demande de mise à jour sans interaction avec une personne faisant fonctionner le dispositif informatique mobile, et pour transférer passivement le paquet de mise à jour au dispositif informatique de véhicule sans interaction avec la personne faisant fonctionner le dispositif informatique mobile.

3. Système selon la revendication 1, dans lequel au moins l'un parmi le dispositif informatique mobile et le dispositif informatique de véhicule valide le paquet de mise à jour en utilisant un certificat de sécurité associé à une source valide du paquet de mise à jour, et facultativement :
dans lequel le dispositif informatique de véhicule est configuré pour valider le paquet de mise à jour avant d'installer le paquet de mise à jour.

4. Système selon la revendication 1, comprenant :
le dispositif informatique de véhicule configuré pour :
vérifier l'installation du paquet de mise à jour avant d'engager l'installation du paquet de mise à jour ;
déterminer, à partir de la vérification, que le paquet de mise à jour n'a pas été installé correctement ; et
annuler l'installation avec retour en arrière du paquet de mise à jour en réponse à la détermination que le paquet de mise à jour n'a pas été installé correctement.

5. Système selon la revendication 1, dans lequel le moment auquel l'installation est compatible avec au moins l'un parmi le fonctionnement du dispositif informatique de véhicule et le fonctionnement du véhicule inclut un paramètre pour une fonctionnalité du véhicule à mettre à jour n'est pas utilisé.

6. Système selon la revendication 1, dans lequel au moins l'un parmi le véhicule et le dispositif informatique de véhicule comprend un capteur d'état de transmission et un capteur de mouvement, le dispositif informatique de véhicule étant en outre configuré pour déterminer que le véhicule est stationné sur la base d'une combinaison d'éléments de données provenant d'un ou plusieurs parmi le capteur d'état de transmission et le capteur de mouvement, dans lequel la combinaison d'éléments de données est un ou plusieurs parmi :
le capteur d'état de transmission indique un état de transmission stationné ; et
le capteur de mouvement confirme que le mouvement du véhicule est inférieur à un seuil.

7. Système selon la revendication 1, dans lequel le capteur de localisation est un système de localisation par satellite, et le capteur de mouvement est connecté à l'un d'au moins l'un parmi un groupe motopropulseur pour le véhicule et un odomètre pour le véhicule.

8. Système selon la revendication 1, comprenant :
un élément de données qui stocke un ensemble de localisations de stationnement auxquelles le véhicule est régulièrement ou couramment stationné, chaque localisation dans l'ensemble de localisations de stationnement étant identifié par le dispositif informatique de véhicule en utilisant un algorithme d'apprentissage machine.

9. Procédé pour mettre à jour la fonctionnalité de dispositifs informatiques de véhicule, comprenant :
la détection, par un dispositif informatique mobile indépendant d'un dispositif informatique de véhicule installé dans un véhicule, d'une première connexion à un réseau de communication ;
la transmission, par le dispositif informatique mobile en réponse à la détection de la première connexion, d'une demande de mise à jour, via le réseau de communication, à un serveur de mise à jour ;
la réception d'un paquet de mise à jour en réponse à la demande de mise à jour ;
le stockage du paquet de mise à jour reçu dans un élément de mémoire du dispositif informatique mobile ;
la détection, par le dispositif informatique mobile, d'une deuxième connexion au dispositif informatique de véhicule ; et
le transfert du paquet de mise à jour stocké depuis l'élément de mémoire du dispositif informatique mobile vers le dispositif informatique de véhicule pour installation,
dans lequel le dispositif informatique de véhicule est configuré pour :
programmer l'installation du paquet de mise à jour pour un moment auquel l'installation est compatible avec au moins l'un parmi le fonctionnement du dispositif informatique de véhicule et le fonctionnement du véhicule, dans lequel l'installation est compatible avec au moins l'un parmi le fonctionnement du dispositif informatique de véhicule et le fonctionnement du véhicule lorsque le véhicule est déterminé comme étant stationné ; et
déterminer que le véhicule est stationné sur la base d'un capteur de localisation (130) dans au moins l'un parmi le véhicule et le dispositif informatique de véhicule indiquant que le véhicule est au niveau d'une localisation de stationnement à laquelle le véhicule est régulièrement ou couramment stationné.

10. Procédé selon la revendication 9, comprenant :
la transmission passive de la demande de mise à jour sans interaction avec une personne faisant fonctionner le dispositif informatique mobile ; et
la transmission passive du paquet de mise à jour au dispositif informatique de véhicule, sans interaction de confirmation, sans interaction avec la personne faisant fonctionner le dispositif informatique mobile.

11. Procédé selon la revendication 9, comprenant :
la validation du paquet de mise à jour en utilisant un certificat de sécurité associé à une source valide du paquet de mise à jour, et facultativement :
dans lequel le dispositif informatique de véhicule est configuré pour valider le paquet de mise à jour avant d'installer le paquet de mise à jour.

12. Procédé selon la revendication 9, dans lequel le dispositif informatique de véhicule est configuré pour :
vérifier l'installation du paquet de mise à jour avant d'engager l'installation du paquet de mise à jour ;
déterminer, à partir de la vérification, que le paquet de mise à jour n'a pas été installé correctement ; et
annuler l'installation avec retour en arrière du paquet de mise à jour en réponse à la détermination que le paquet de mise à jour n'a pas été installé correctement.

13. Procédé selon la revendication 9, dans lequel le moment auquel l'installation est compatible avec au moins l'un parmi le fonctionnement du dispositif informatique de véhicule et le fonctionnement du véhicule inclut un paramètre pour une fonctionnalité du véhicule à, et mettre à jour n'est pas utilisé, et/ou :
dans lequel au moins l'un parmi le véhicule et le dispositif informatique de véhicule comprend un capteur d'état de transmission et un capteur de mouvement, le dispositif informatique de véhicule étant en outre configuré pour déterminer que le véhicule est stationné sur la base d'une combinaison d'éléments de données provenant d'un ou plusieurs parmi le capteur d'état de transmission et le capteur de mouvement, dans lequel la combinaison d'éléments de données est un ou plusieurs parmi :
le capteur d'état de transmission indique un état de transmission stationné ; et
le capteur de mouvement confirme que le mouvement du véhicule est inférieur à un seuil.

14. Procédé selon la revendication 9, dans lequel le capteur de localisation est un système de localisation par satellite, et le capteur de mouvement est connecté à l'un parmi soit un groupe motopropulseur pour le véhicule, soit l'odomètre pour le véhicule.

15. Procédé selon la revendication 9, dans lequel au moins l'un parmi le véhicule et le dispositif informatique de véhicule comprend un élément de données stockant un ensemble de localisations de stationnement auxquelles le véhicule est régulièrement ou couramment stationné, chaque localisation dans l'ensemble de localisations de stationnement étant identifiée par le dispositif informatique de véhicule en utilisant un algorithme d'apprentissage machine.
